# EUROPÄISCHE PATENTSCHRIFT

(11) **EP 2 712 574 B1**
(45) Veröffentlichungstag und Bekanntmachung des Hinweises auf die Patenterteilung: **11.04.2018**
(21) Anmeldenummer: 13185842.5
(22) Anmeldetag: 24.09.2013
(51) Int. Cl.: A61C 8/00

(54) **Herstellen einer Innenstruktur für ein Keramikimplantat und ein keramisches Aufbauelement**
Production of an internal structure for a ceramic implant and a ceramic structure element
Fabrication d'une structure interne pour un implant céramique et élément de structure céramique

(30) Priorität: 26.09.2012 CH 17442012
(43) Veröffentlichungstag der Anmeldung: 02.04.2014
(73) Patentinhaber: Z-Systems Schweiz AG, 4702 Oensingen (CH)
(72) Erfinder: Thomke, Ernst, 2540 Grenchen (CH); Staudenmann, Roger, 3292 Busswil b. Büren (CH); Hug, Thomas, 8703 Erlenbach (CH); Di Girolamo, Rubino, 6315 Oberrägeri (CH)
(74) Vertreter: Frei Patent Attorneys

(56) Entgegenhaltungen:
- EP-A1- 1 967 157
- WO-A1-2012/128623
- WO-A2-2008/022635
- DE-A1-102005 008 273
- US-A- 4 766 704

## Beschreibung

Die Erfindung liegt auf dem Gebiet der Zahnmedizin und beschreibt ein Verfahren zur Bearbeitung eines Keramikimplantats oder eines keramischen Aufbauelementes zur Herstellung einer Innenstruktur. Weitere Aspekte betreffen ein Keramikimplantat, ein keramisches Aufbauelement und ein Implantatsystem.

### Stand der Technik

Implantate hergestellt aus Keramik sind aus dem Stand der Technik bekannt und werden insbesondere auf Grund ihrer ausserordentlichen Biokompatibilität und ästhetischer Vorteile gegenüber den herkömmlichen Implantaten aus Titan und Titanlegierungen für zahnmedizinische Anwendungen oftmals bevorzugt. Verbundsysteme bzw. Verbindungssysteme für zweiteilige Zahnimplantate aus Keramik und hybride zweigeteilte Zahnimplantate aus Keramik sind beispielsweise aus WO 2008022635, EP 1967157, WO 2012/128623 und DE 10 2005 008273 bekannt.

Keramikimplantate werden bekannterweise aus Oxidkeramik, beispielsweise aus Zirkonoxid oder Aluminiumoxid basierter Keramik hergestellt. Die Herstellung von Implantaten aus Titan oder Titanlegierungen und von Keramikimplantaten ist unterschiedlich. Das Keramikmaterial ist besonders hart und lässt sich nicht mit den gleichen Techniken bearbeiten wie sie in der Metallbearbeitung üblich sind. Insbesondere kann auf Grund seiner sprödharten Eigenschaften Keramikmaterial nicht gestanzt oder gedreht werden. Die üblicherweise angewendeten abtragenden Verfahren insbesondere Schleifen zur Herstellung der Aussenkonturen oder Innenkonturen von Keramikimplantaten sind vergleichsweise zeitaufwändig und deshalb teuer.

Ein solches Verfahren beschreibt EP 2 072 020 zur Herstellung zahnmedizinischer Produkte aus Keramik, wie Implantate, Brücken, Aufbauelemente (abutment). In diesem Verfahren wird zunächst durch Verpressen eines keramischen Pulvers beispielsweise bei 180 bis 300 MPa ein Keramik Grünling hergestellt, der einen Binder enthält. Dieser Grünling wird beispielsweise durch Spanen oder Schleifen bearbeitet. Erst nach dieser Bearbeitung wird beim Sintern der Binder entfernt. Zur Steigerung der Bearbeitungseffizienz werden mehrere Schritte von Schleifen bei ansteigenden Geschwindigkeiten und mit einem anfänglich grösseren Durchmesser des Fräswerkzeugs beschrieben.

US 4,766,704 beschreibt die Herstellung von keramischen Zahnrestaurationsteilen aus einem Rohling mittels einer rotierenden Schleifscheibe.

Zur Herstellung von filigranen Konturen und insbesondere von Innenkonturen sind Schleifverfahren mit rotierenden Stiften üblich, wie beispielsweise in US 4766704 beschrieben. Diese Bearbeitungsschritt ist zweitaufwändig, weil oft nur an der Stirnfläche des Stiftes, oder senkrecht dazu Keramikmaterial abgetragen wird, wobei in beiden Fällen nur wenig Keramikmaterial pro Zeit abgetragen wird. Deshalb verlangsamen derartige Schleifschritte die Produktion von Keramikimplantaten. Deshalb stellt die Herstellung von solchen Innenkonturen bei Keramikimplantaten im Vergleich zur Herstellung von Innenkonturen bei herkömmlichen Implantaten aus Titan oder Titanlegierungen auch einen wesentlich grösseren Kostenfaktor dar.

Es ist eine Aufgabe der vorliegenden Erfindung ein Verfahren zur Bearbeitung eines Keramikimplantates oder eines keramischen Aufbauelementes bereitzustellen, mit welchem Innenkonturen insbesondere für eine Eindrehgeometrie, eine Verdrehsicherung oder eine Positionierstruktur eines Keramikimplantates oder eines keramischen Aufbauelementes in einem besonders effizienten Verfahren herzustellen. Weitere Aufgaben der Erfindung betreffen Keramikimplantate und keramische Aufbauelemente für ein Implantatsystem mit Innenkonturen, welche besonders effizient, hergestellt werden können.

Diese Aufgaben werden gelöst durch ein Verfahren, ein Keramikimplantat, ein keramisches Aufbauelement und ein Implantatsystem gemäss den unabhängigen Ansprüchen. Die abhängigen Ansprüche definieren weitere Ausführungsformen der Erfindung.

In einem ersten Aspekt der Erfindung wird ein Verfahren zur Herstellung einer Innenstruktur als Eindrehgeometrie und/oder als Verdrehsicherung eines Keramikimplantates oder eines keramischen Aufbauelementes bereitgestellt. Dabei wird eine rotierende Scheibe zur Abtragung von Keramikmaterial in einer Vortriebrichtung der rotierenden Scheibe senkrecht zur Rotationsachse der Scheibe in eine proximal zugängliche Fläche des Keramikimplantates, oder in eine Endfläche eines keramischen Aufbauelementes vorgetrieben.

Der vorliegende Text bezeichnet als Keramikimplantat ein keramisches Dentalimplantat, das mit mindestens einem distalen Bereich in ein Knochengewebe implantierbar ist. In manchen Ausführungsformen ist das Keramikimplantat ein stiftförmiges Dentalimplantat.

Das Keramikimplantat kann das im Knochen verankerte Zahnimplantat eines zwei- oder mehrteiligen Implantatsystems sein oder es kann ein einteiliges im Knochen verankertes Zahnimplantat sein.

Als Aufbauelemente werden hier sogenannte "Abutments", also beispielsweise transgingivale Teile bezeichnet wie eine transgingviale Patrize für ein Matrizensystem. Solche Abutments weisen eine Struktur auf zum Befestigen eines tertiären Teils wie Kronen, Prothesen, Brücken, Kappen etc. Weiter werden als Aufbauelemente auch direkt (unmittelbar) am Implantat zu befestigende Kronen, Prothesen, Brücken, Kappen etc. bezeichnet. Das Aufbauelement ist also nicht selbst im Knochen verankert sondern direkt oder indirekt über ein oder mehrere weitere Aufbauelemente am Implantat befestigt.

In diesem Text bezeichnet Implantatsystem ein Zahnimplantatsystem, welches nebst dem im Knochen verankerten Implantat mindestens ein Aufbauelement aufweist. Mindestens das Implantat und/oder mindestens ein Aufbauelement des Implantatsystems ist aus keramischem Material gefertigt. Das Zahnimplantatsystem kann auch Teile enthalten, die nicht oder nur teilweise aus Keramik bestehen, beispielsweise ein Implantat aus Titan.

Die mindestens eine Innenstruktur des Keramikimplantates oder des Aufbauelementes ist eine Ausnehmung des Keramikimplantat oder keramischen Aufbauelement, welche mit einer rotierenden Scheibe herstellbar ist. Die rotierende Scheibe trägt keramisches Material des Keramikimplantates oder des keramischen Aufbauelementes ab, so dass durch die Ausnehmung von keramischem Material eine Innenstruktur des Keramikimplantates oder des keramischen Aufbauelementes entsteht, die als Eindrehgeometrie für das Keramikimplantat und/oder als Eindrehgeometrie, als Verdrehsicherung und/oder als Positionierstruktur für die Verbindung des Implantates mit dem keramischen Aufbauelement oder zwischen zwei Aufbauelementen dient.

Die Innenstruktur der Eindrehgeometrie ist kompatibel mit einer Aussenstruktur eines Eindrehwerkzeuges und/oder mit einer Aussenstruktur eines Aufbauelementes. Die Innenstruktur der Verdrehsicherung oder der Positionierstruktur ist kompatibel mit einer Aussenstruktur eines Implantates oder eines weiteren Aufbauelementes. Die Einführrichtungen des Eindrehwerkzeuges in die Eindrehgeometrie beziehungsweise der Aussenstruktur des Aufbauelementes in die Verdrehsicherung oder in die Positionierstruktur stimmen mit der Vortriebrichtung der rotierenden Scheibe in die proximal zugängliche Fläche des Keramikimplantate beziehungsweise in eine der Endflächen des Aufbauelementes überein.

Die Eindrehgeometrie dient dem Eindrehen des Implantates in den Knochen oder auch einer Verbindung von Aufbauelement mit Implantat oder zwei Aufbauelementen untereinander, mittels eines Eindrehwerkzeuges oder in manchen Ausführungsformen mittels Aussenstrukturen des Aufbauelementes. Die Verdrehsicherung verhindert die Lockerung einer Schraubverbindung, insbesondere zwischen einem Implantat und einem Aufbauelement oder zwischen zwei Aufbauelementen. Die Positionierstruktur gewährleistet bestimmte relative Positionen oder eine Auswahl von relativen Positionen zwischen Implantat und Aufbauelement oder zwischen zwei Aufbauelementen, die beispielsweise mit einer Klebverbindung verbunden werden.

Die Begriffe "proximal" und "distal" werden im vorliegenden Text bezogen auf die Implantationsrichtung verwendet. Im Allgemeinen entspricht die distale Richtung der Richtung zum apikalen Ende des Zahnimplantats (oder der Zahnwurzel des Zahns) hin, während die proximale Richtung der koronalen Richtung entspricht.

Das Keramikimplantat oder das keramische Aufbauelement besteht aus Keramikmaterial, insbesondere aus einer Oxidkeramik wie beispielsweise Zirkonoxid-basierte Keramik, Yttrium-stabilisierte Zirkonoxid-basierte Keramik oder Aluminiumoxid -basierte Keramik. In manchen Ausführungsformen wird das Keramikimplantat oder das keramische Aufbauelement mit nicht-keramischen Teilen eines Implantatsystems verbunden.

Ohne andere diesbezügliche Angaben bezieht sich die Bezeichnung Keramikimplantat oder keramisches Aufbauelement in diesem Text, sowohl auf gesinterte Keramikkörper, sowie auch auf noch nicht gesinterte Zwischenprodukte im Herstellungsverfahren des Keramikimplantates oder des keramischen Aufbauelementes, so genannte Grünlinge. Ferner werden mit den Begriffen Keramikimplantat und keramisches Aufbauelement ohne anderen diesbezüglichen Hinweis nicht nur die fertig bearbeiteten Endprodukte sondern auch erst unvollständig bearbeitete Rohlinge bezeichnet, deren Aussen- und/oder Innenkonturen beispielsweise noch nicht vollständig hergestellt sind. Wenn es aus dem Kontext klar ist, dass es um keramische Teile geht, werden die Begriffe Keramikimplantat oder keramisches Aufbauelement manchmal gekürzt auf Implantat und Aufbauelement.

Eine proximal zugängliche Fläche des Keramikimplantates bedeutet, dass die Fläche, in welche während der Herstellung die rotierende Scheibe der Innenstruktur vorgetrieben wurde, zumindest unmittelbar nach der Implantation des Keramikimplantates im Knochen von der proximalen Seite her zugänglich bleibt also nicht mit Knochengewebe umgeben ist. In manchen Ausführungsformen, insbesondere des zwei- oder mehrteiligen Implantatsystems ist nach der Implantation im Wesentlichen das ganze Keramikimplantat ausser der proximal zugänglichen Fläche von Knochengewebe umgeben. Die proximal zugängliche Fläche des Implantates ist eine Stirnfläche eines Keramikimplantates, insbesondere eines stiftförmigen Keramikimplantates, wobei die Stirnfläche im wesentlichen senkrecht zur Implantatachse steht.

Die Endfläche des keramischen Aufbauelementes ist eine innere oder äussere Oberfläche des Aufbauelementes, welche im Herstellungsverfahren für die Bearbeitung zugänglich ist und in welche die rotierende Scheibe in einer Richtung senkrecht zu ihrer Rotationsachse vorgetrieben wird.

Die proximal zugängliche Fläche des Implantates oder die Endfläche des Aufbauelementes ist in manchen Ausführungsformen flach oder in anderen Ausführungsformen gewölbt. In manchen Ausführungsformen ist die proximal zugängliche Fläche oder Endfläche beispielsweise parallel zur Achse angeordnet, wie beispielsweise die Mantelfläche eines Innen- oder Aussenzylinders oder sie ist abgewinkelt zur Achse, wie beispielsweise die Mantelfläche eines Innen- oder Aussenkonus. Die proximal zugängliche Fläche oder die Endfläche kann sich beispielsweise treppenartig über mehrere Ebenen erstrecken. Die proximal zugängliche Fläche oder die Endfläche kann in verschieden Bereichen unterschiedlich oder sie kann gleichförmig sein.

In manchen Ausführungsformen des Aufbauelementes wird eine Innenstruktur mit dem erfindungsgemässen Verfahren in mehr als einer Endfläche hergestellt, beispielsweise in zwei lateralen Endflächen oder in einer distalen und einer proximalen Endfläche oder auch in mehr als zwei Endflächen.

Im erfindungsgemässen Verfahren wird zur Abtragung von Keramikmaterial eine rotierende Scheibe verwendet und in einer Vortriebrichtung der rotierenden Scheibe senkrecht zur Rotationsachse der Scheibe in eine proximal zugängliche Fläche des Keramikimplantates vorgetrieben, oder in eine Endfläche des keramischen Aufbauelementes vorgetrieben. Dies bedeutet, dass vorteilhafterweise die rotierende Scheibe beidseitig auf beiden ihren Scheibenflächen Keramikmaterial abträgt. Durch solches beidseitiges Schleifen senkrecht zur Rotationsachse wird Keramikmaterial wesentlich effizienter und schneller abgetragen als beispielsweise durch eine vergleichbare grosse Stirnfläche eines um seine Längsachse rotierenden Stiftes, welcher parallel zu seine Rotationsachse vorgetrieben wird. Somit ist mit dem erfindungsgemässen Verfahren Eindrehgeometrie, Verdrehsicherung und/oder Positionierstruktur wesentlich schneller und kostengünstiger herstellbar als mit herkömmlichen Verfahren. Die rotierende Scheibe wird im folgenden Text kürzer auch als Schleifscheibe oder Scheibe bezeichnet.

In manchen Ausführungsformen des erfindungsgemässen Verfahrens wird die Scheibe 1 senkrecht zur Rotationsrichtung der Scheibe aber nicht senkrecht zur proximal zugänglichen Fläche des Keramikimplantates oder zur Endfläche des keramischen Aufbauelementes vorgetrieben.

Durch das Vortreiben der rotierenden Scheibe senkrecht zur Rotationsachse in eine proximal zugängliche Fläche des Implantates oder in eine Endfläche des keramischen Aufbauelementes, entsteht eine Innenstruktur mit einer schlitzartigen Öffnung. Die rotierende Scheibe ist in manchen Ausführungsformen eine Formschleifscheibe, das Schleifwerkzeug bestimmt also die Form der Innenstruktur des Implantates. In manchen Ausführungsformen wird die Scheibe etwas weniger tief in die proximal zugängliche Fläche des Keramikimplantates oder in die Endfläche des keramischen Aufbauelementes vorgetrieben als bis zum Scheibenmittelpunkt, durch welchen die sich drehende Rotationsachse führt.

In solchen Ausführungsformen des Verfahrens ist der Scheibenmittelpunkt während dem ganzen Herstellungsverfahren der Innenstruktur proximal zur proximal zugänglichen Fläche des Keramikimplantates oder proximal zur Endfläche des Aufbauelementes positioniert. Ein Längsschnitt durch den Schlitz parallel zur Vortriebrichtung der rotierenden Scheibe, welche in eine geschlossene proximal zugängliche Fläche oder in eine geschlossene Endfläche vorgetrieben wird, ist dann ein Kreissegment, das kleiner als ein Halbkreis ist. Dieses Kreissegment wird gebildet durch eine Sehne an der Öffnung des Schlitzes und einen Kreisbogen im Keramikimplantat oder keramischen Aufbauelement. Die Länge und Tiefe des Schlitzes ist im Wesentlichen abhängig davon wie tief die Scheibe in das Keramikimplantat oder in das keramische Aufbauelement vorgetrieben wird. Beide sind maximal etwas kürzer als der Durchmesser der rotierenden Scheibe. Die Breite des Schlitzes misst im Wesentlichen gleichviel wie die Breite der Scheibe.

Wird die rotierende Scheibe mehr als einmal an verschiedenen Positionen auf der proximal zugänglichen Fläche des Implantates oder der Endfläche des Aufbauelementes vorgetrieben so entsteht eine mehr-schlitzige Innenstruktur, beispielsweise eine Innenstruktur mit zwei oder mehreren parallelen Schlitzen oder mit zwei oder mehreren sich schneidenden Schlitzen. Dabei können gleich dimensionierte oder unterschiedlich dimensionierte rotierende Scheiben zur Herstellung der mehr-schlitzigen Innenstruktur verwendet werden.

In manchen Ausführungsformen des Keramikimplantates oder des keramischen Aufbauelementes kreuzen sich die Schlitze. In solchen Ausführungen entstehen beispielsweise aus zwei sich kreuzenden ganzen Schlitzen vier Teilschlitze, oder aus drei sich kreuzenden Schlitzen entstehen sechs Teilschlitze usw. In manchen dieser Ausführungsformen kreuzen sich die Schlitze in der jeweiligen Mitte der Schlitzöffnung. Dadurch entsteht eine Innenstruktur mit mehreren Teilschlitzen, deren Länge jeweils etwas weniger als die Hälfte eines ganzen Schlitzes beträgt.

In manchen Ausführungsformen mit sich kreuzenden Schlitzen einstehen Teilschlitze von denen ein Endpunkt des Kreisbogens in der proximal zugänglichen Fläche des Keramikimplantates liegt, während der andere Endpunkt des Kreisbogens im Innern des Keramikimplantates oder des keramischen Aufbauelementes liegt, beispielsweise an einem Schnittpunkt mit einem kreuzenden Schlitz oder auf einer Innenwand eines Hohlraums des Keramikimplantats oder keramischen Aufbauelementes.

In manchen Ausführungsformen ist die proximal zugängliche Fläche des Implantates oder die Endfläche des Aufbauelementes einen Hohlraum nicht eine geschlossene Fläche, sondern sie umrandet einen Hohlraum im Keramikimplantat oder im keramischen Aufbauelement, beispielsweise ein Bohrloch. Ein solcher Hohlraum öffnet sich also in die proximal zugängliche Fläche eines Implantates oder in eine Endfläche eines Aufbauelementes. In manchen Ausführungsformen des Keramikimplantates oder des keramischen Aufbauelementes mit einem Hohlraum, ist dieser Hohlraum rotationssymmetrisch, insbesondere zylindrisch oder konisch. In manchen dieser Ausführungsformen mit einem Hohlraum ist die proximal zugängliche Fläche des Implantates oder die Endfläche des Aufbauelementes ringförmig. In manchen Ausführungsformen des Keramikimplantates oder des Aufbauelementes mit einem Hohlraum ist die proximal zugängliche Fläche des Implantates oder die Endfläche des Aufbauelementes bündig mit der Öffnung des Hohlraumes; in andern Ausführungsformen ist die proximal zugängliche Fläche des Implantates oder die Endfläche des Aufbauelementes in dem Hohlraum versenkt. In manchen Ausführungsformen umrandet die proximal zugängliche Fläche oder die Endfläche die Öffnung des Hohlraumes vollständig; in anderen Ausführungsformen umrandet die proximal zugängliche Fläche oder die Endfläche die Öffnung mindestens teilweise beispielsweise als eine geöffnete Ringfläche.

So öffnet sich in manchen Ausführungsformen des Keramikimplantates oder des keramischen Aufbauelementes mit einem Hohlraum die Innenstruktur nicht nur in die proximal zugängliche Fläche des Implantates bzw. in eine oder mehrere Endflächen des Aufbauelementes, in welche die senkrecht zur Vortriebsrichtung rotierende Scheibe eingeführt wurde, sondern zusätzlich auch in den Hohlraum. In solchen Ausführungsformen des Keramikimplantates oder keramischen Aufbauelementes entstehen Teilschlitze, deren Öffnung seitlich aussen, also an der der Mantelfläche zugewandten Seite durch die den Hohlraum umrandenden proximal zugänglichen Fläche des Keramikimplantates oder der Endfläche des Aufbauelementes begrenzt wird. Auf der dem Hohlraum zugewandten Seite münden die Teilschlitze in den Hohlraum.

In manchen Ausführungsformen des Keramikimplantates oder keramischen Aufbauelementes mit einem Hohlraum ist dieser ein zentraler Hohlraum wie beispielsweise ein Bohrloch mit einem Durchmesser. In manchen dieser Ausführungsformen wird für das erfindungsgemässe Verfahren eine rotierende Scheibe mit einem Durchmesser gewählt, wobei der Scheibendurchmesser grösser ist als der Hohlraumdurchmesser. In solchen Ausführungsformen entstehen durch das Vortreiben der rotierenden Scheibe senkrecht zu der Rotationsachse der Scheibe in die proximal zugängliche Fläche des Implantates oder in eine Endfläche des Aufbauelementes Innenstrukturen mit zwei Teilschlitzen, welche als Eindrehgeometrie, Verdrehsicherungs- und/oder Positionierstruktur dienen. Durch mehrmaliges Vortreiben der Scheibe in solche hier beschrieben Ausführungsformen des Keramikimplantates oder keramischen Aufbauelementes entstehen Innenstrukturen mit einer geraden Anzahl von Teilschlitzen.

In andern Ausführungsformen des erfindungsgemässen Verfahrens wird die rotierende Scheibe mit einem mit einem Durchmesser gewählt, wobei der Scheibendurchmesser kleiner ist als der Hohlraumdurchmesser. In solchen Ausführungsformen entstehen durch das Vortreiben der rotierenden Scheibe senkrecht zu der Rotationsachse der Scheibe in die proximal zugängliche Fläche des Implantates oder in eine Endfläche des Aufbauelementes Innenstrukturen mit einem Teilschlitz. Selbst ein solcher einzelner Teilschlitz kann als Eindrehgeometrie, Verdrehsicherungs- und/oder Positionierstruktur dienen. Durch mehrmaliges Vortreiben der Scheibe mit einem Scheibendurchmesser, der kleiner ist als der Hohlraumdurchmesser, entsteht eine Innenstruktur, welche eine ungerade oder eine gerade Anzahl an Teilschlitzen aufweist.

In manchen Ausführungsformen des Verfahrens zur Herstellung einer Innenstruktur des Keramikimplantates oder keramischen Aufbauelementes mit einem Hohlraum, wird zuerst der Hohlraum und nachher die Innenstruktur als Eindrehgeometrie, Verdrehsicherung und oder Positionierstruktur hergestellt, während in andern Ausführungsformen diese Reihenfolge umgekehrt ist.

Ein zweiter Aspekt der Erfindung betrifft ein Keramikimplantat nach Anspruch 8 oder ein keramisches Aufbauelement nach Anspruch 9, mit einer Innenstruktur, welche mit dem erfindungsgemässen Verfahren herstellbar ist.

Durch das Herstellungsverfahren der Innenstrukturen mit einer rotierenden Scheibe welche senkrecht zur Rotationsachse in das Implantat oder in das Aufbauelement vorgetrieben wird entstehen Innenstruktur deren Längsschnitte in der einer Ebene parallel zur Vortriebsrichtung der rotierenden Scheibe geometrische Formen aufweisen wie sie in den Ansprüchen definiert und in den folgenden Figuren beschrieben sind.

Ein dritter Aspekt der Erfindung betrifft ein Implantatsystem welches ein Keramikimplantat oder ein keramisches Aufbauelement enthält mit einer Innenstruktur, die mit dem erfindungsgemässen Verfahren herstellbar ist und/oder oben beschriebene Eigenschaften aufweist. Das Implantatsystem enthält mindestens ein im Knochen verankertes Implantat und mindestens ein Aufbauelement auf, wobei mindestens das Implantat oder mindestens ein Aufbauelement aus Keramikmaterial hergestellt ist und eine Innenstruktur aufweist, welche als Eindrehgeometrie, Verdrehsicherung und/oder Positionierstruktur dient. So ist das Implantat des Implantatsystems in manchen Ausführungsformen ein Keramikimplantat oder in anderen Ausführungsformen besteht das Implantat aus einem anderem Material wie beispielsweise aus Titan oder einer Titanlegierung. In Ausführungsformen mit einem nicht-keramischen Implantat ist mindestens ein Aufbauelement ein keramisches Aufbauelement mit einer Innenstruktur als Verdrehsicherung, Eindrehgeometrie und/oder Positionierstruktur. In Ausführungsformen mit einem Keramikimplantat und mit mindestens einem keramischen Aufbauelement weist mindestens das Keramikimplantat oder mindestens ein keramisches Aufbauelement eine Innenstruktur als Verdrehsicherung, Positionierstruktur und/oder Eindrehgeometrie auf, wobei diese Innenstruktur mit dem erfindungsgemässen Verfahren herstellbar ist.

Ein vierter Aspekt der Erfindung betrifft ein Set enthaltend ein Eindrehwerkzeug und enthaltend ein Keramikimplantat oder mindestens ein keramisches Aufbauelement oder ein Implantatsystem mit mindestens einer Innenstruktur als Eindrehgeometrie wie sie im vorgängigen Text beschrieben wurden.

Im folgenden werden manche Ausführungsformen der Erfindung anhand von Figuren und Beispielen weiter erläutert.

### Figurenliste

- **Fig.1:**: Darstellung des Verfahrens mit einer schematischen Zeichnung
- **Fig.2:**: Verfahrensvarianten mit unterschiedlicher Vortriebtiefe der Scheibe für eine Innenstruktur
- **Fig.3:**: Innenstruktur mit 2 Teilschlitzen
- **Fig.4:**: Innenstruktur mit Hohlraum und zwei Teilschlitzen
- **Fig.5:**: Innenstruktur mit Hohlraum und einem Teilschlitz
- **Fig. 6a und 6b:**: 3D Darstellungen zur Herstellung einer Innenstruktur in einer der proximalen Endfläche eines Keramikimplantates mit einer Schleifscheibe
- **Fig.7:**: sind Schnittzeichnungen in Fig.7 a eines Keramikimplantates mit einer Innenstruktur und in Fig.7b eines Aufbauelementes mit einer Aussenstruktur.
- **Fig.8:**: sind Schnittzeichnungen in Fig.8 a eines Keramikimplantates mit einer Aussenstruktur und in Fig.8b eines keramischen Aufbauelementes mit einer Innenstruktur.
- **Fig. 9:**: Ausführungsbeispiel geklebtes zweiteiliges Implantatsystem:
a: Aufsicht auf Implantat
b: Schnitt durch Implantat
c: Aufsicht auf proximal zugängliche Fläche
d: seitliche Aufsicht auf Eindrehwerkzeug
e: Aufsicht auf Eindrehwerkzeug aus distaler Richtung f: Aufsicht auf Abutment
- **Fig. 10**: Ausführungsbeispiel geschraubtes zweiteiliges Implantatsystem:
a: Schnitt durch Implantat
b:Schnitt durch Implantat und Abutment
c: Aufsicht auf Implantat und Abutment
d: Aufsicht/Schnitt: B-B

### Detaillierte Beschreibung anhand der Figuren

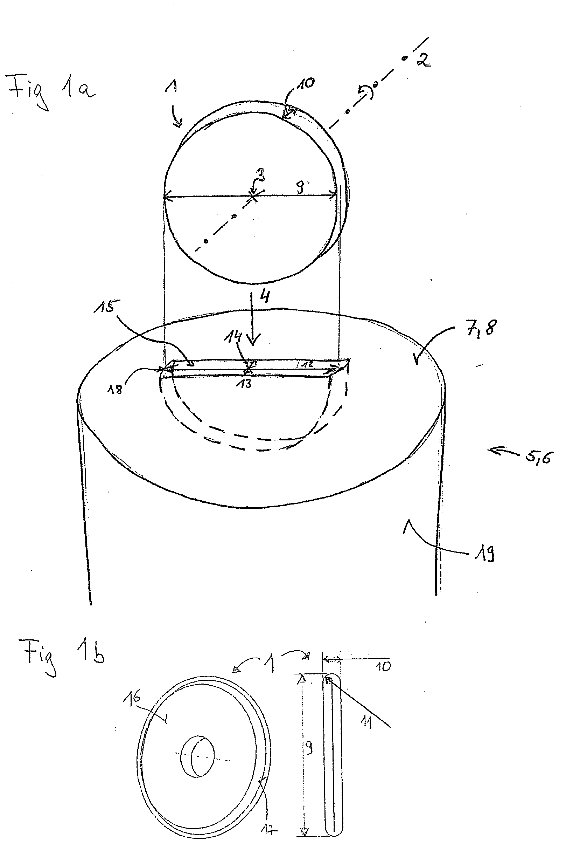

**Fig. 1a** zeigt in einer schematischen Zeichnung eine beispielhafte Ausführungsform des Verfahrens zur Herstellung einer Innenstruktur in einer proximal zugänglichen Fläche 7 eines Keramikimplantates 5 oder in einer Endfläche 8 eines keramischen Aufbauelementes 6. Das Keramikimplantat 6 oder das keramische Aufbauelement 5 wird in einer Schleifmaschine fixiert. Eine Scheibe 1 rotierend um eine Rotationsachse 2 wird in einer Vortriebrichtung 4 senkrecht zu ihrer Rotationsachse 2 in die proximal zugängliche Fläche 7 eines Keramikimplantates 5 oder in die Endfläche 8 des keramischen Aufbauelementes 6 vorgetrieben. Dadurch wird keramisches Material abgetragen und eine Innenstruktur des Implantates oder des Aufbauelementes hergestellt.

Die rotierende Scheibe ist beispielsweise ein metallgebundenes oder ein kunststoffgebundenes Diamantwerkzeug. Metallgebundene Diamantwerkzeuge weisen eine längere Standzeit auf als kunststoffgebundene Diamantwerkzeuge, sind jedoch teurer als letztere. Die Diamantkorngrösse ist beispielsweise im Bereich von 20 bis 120 µm, insbesondere im Bereich von 46 bis 60 µm.

Die rotierende Scheibe 1 ist eine Formschleifscheibe, das Schleifwerkzeug bestimmt also die Form der Innenstruktur des Implantates 5 oder Aufbauelementes 6. Ein Scheibendurchmesser 9 misst beispielsweise 2 bis 20 mm oder auch mehr und er misst insbesondere 4 bis 10, oder 4 bis 8 mm, oder 5 bis 7 mm. Ein Scheibendurchmesser im Bereich von 5 bis 7 mm ist besonders geeignet zur Herstellung von Innenstrukturen in der proximal zugänglichen Fläche des Implantates. Eine Scheibenbreite 10 misst beispielsweise 0.2 bis 4 mm oder 0.2 bis 3 mm oder insbesondere 0.3 bis 2 mm, 0.2 bis 1mm oder 0.4 bis 0.8 mm oder insbesondere 0.5 bis 0.7 mm.

**Fig. 1b** zeigt eine beispielhafte Ausführungsform der rotierenden Scheibe 1 in einer Aufsicht und im Profil. Die Schleifscheibe 1 weist zwei ebene Mantelflächen 16 und eine aussenseitig die Mantelflächen verbindende gewölbte Stirnfläche 17 auf. Die materialabtragende Wirkung der rotierenden Scheibe 1 wird durch die beiden Mantelflächen 16 und die Stirnfläche 17 erzielt, was die Bearbeitungszeit im Vergleich zu Bearbeitungsverfahren mit einem Schleifstift erhöht. Das Profil der rotierenden Scheibe 1 zeigt den Scheibendurchmesser 9, die Scheibenbreite 10 und den Radius 11 der gewölbten Stirnfläche 17. Scharfen Ecken erhöhen auf Grund ihrer Kerbwirkung die Bruchanfälligkeit von Keramikimplantaten und keramischen Aufbauelementen. Der Radius 11 wird deshalb im Verhältnis zur Scheibenbreite 10 mit Vorteil gross gewählt beispielsweise in einem Verhältnis von Radius 11 zu Scheibenbreite 10 von grösser als 1 zu 3 oder insbesondere grösser als 1 zu 2. Eine beispielhafte Ausführungsform der Schleifscheibe weist einen Durchmesser 9 von 6.5 mm, eine Breite 10 von 0.7 mm und einen Radius 11 von 0.35 mm auf. Die gewölbte Stirnfläche verhindert die Bildung von scharfen Ecken in der Innenstruktur und deren Kerbwirkung. Keramikimplantate und keramische Aufbauelemente mit einer Innenstruktur, welche mit einer derartig dimensionierten Schleifscheibe hergestellt werden, zeichnen sich deshalb durch eine besonders niedrige Bruchanfälligkeit aus.

Ein weiterer Vorteil des Verfahrens ist, dass die Rundung 18 an der Stirnseite des Schlitzes 15 sehr nahe an der Mantelfläche 19 des Keramikimplantates 5 oder des keramischen Aufbauelementes 6 angeordnet werden kann ohne die Mantelfläche zu verletzen. Die Schlitztiefe ist im Bereich nahe der Rundung auf Grund der kreisbogenförmigen Ausnehmung des Schlitzes sehr gering und nimmt in Richtung Schlitzmittelpunkt 14 zu.

Die Drehzahl der Scheibe wird in einem Bereich von 5'000 bis 100'000 Umdrehungen pro Minute gewählt, insbesondere von 10'000 bis 60'000 Umdrehungen pro Minute oder von 20'000 bis 40'000 Umdrehungen pro Minute. Üblicherweise wählt der Fachmann die Drehzahl umso grösser je kleiner die Mantelfläche des Schleifwerkzeuges ist. So kann er den Materialabtrag optimieren und eine optimale Schnittgeschwindigkeit im Bereich von beispielsweise 10 bis 100 mm pro min erreichen.

Durch das Vortreiben der rotierenden Scheibe in die proximal zugängliche Fläche 7 des Implantates 5 oder in die Endfläche 8 des Aufbauelementes 6 entsteht eine Innenstruktur. Ist die proximal zugängliche Fläche 7 oder die Endfläche 8 eine geschlossene Fläche so entsteht durch das Vortreiben ein Schlitz 15 mit einer Schlitzbreite 13, welche der Scheibenbreite 10 entspricht und einer Rundung 18 an der Stirnseite des Schlitzes, welche dem Radius 11 entspricht. Die Schlitzlänge 12, ist höchstens etwas kleiner als der Scheibendurchmesser 9, wenn die Rotationsachse der rotierenden Scheibe zentrisch durch den Scheibenmittelpunkt 3 verläuft. Eine Mitte 14 der Schlitzöffnung ist auf der halben Länge und der halben Breite des Schlitzes definiert.

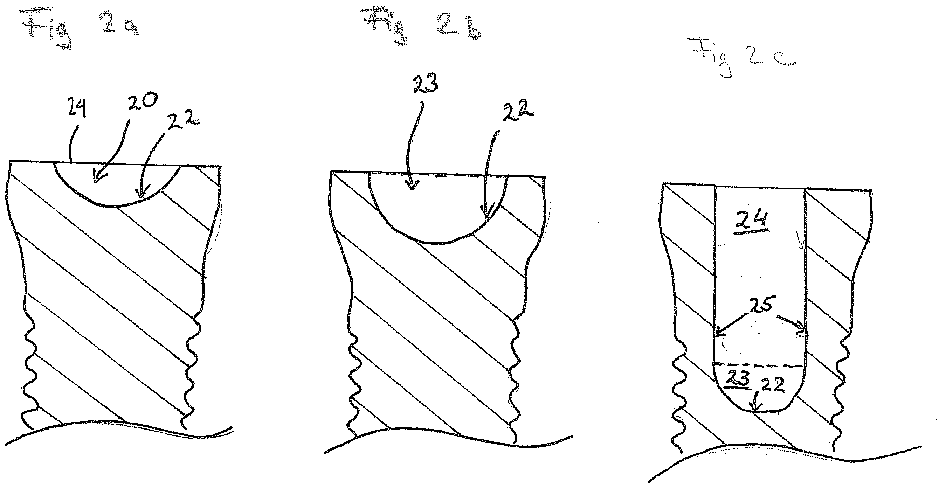

**Fig.2** zeigt beispielhafte Ausführungsformen mit unterschiedlicher Vortriebtiefe der Scheibe 1. In manchen anderen Ausführungsformen des Verfahrens wie dargestellt in Fig. 2 a wird die rotierende Scheibe 1 beispielsweise über eine zentrische Rotationsachse 2 angetrieben und weniger weit als bis zum Scheibenmittelpunkt in die proximal zugängliche Fläche 7 des Keramikimplantates 5 oder in die Endfläche 8 des keramischen Aufbauelementes 6 vorgetrieben. In solchen Ausführungsformen des Verfahrens entsteht ein Schlitz 15 dessen Längsschnitt parallel zur Vortriebrichtung 4 der rotierenden Scheibe 1 ein Kreissegment 20 ist, welches am distalen Ende von einem Kreisbogen 22 begrenzt und in der proximal zugänglichen Fläche durch eine Sehne 24 begrenzt wird.

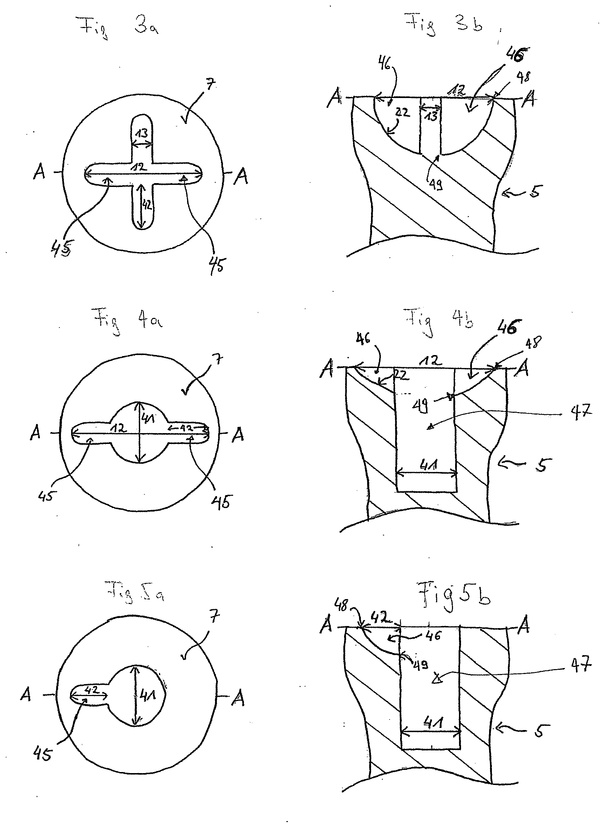

In andern Ausführungsformen wird die Scheibe 1 bis zu ihrem Mittelpunkt oder tiefer als bis zu ihrem Mittelpunkt in das Implantat oder Aufbauelement vorgetrieben. Die Scheibe 1 wird beispielsweise über eine exzentrische Rotationsachse angetrieben. In manchen Ausführungsformen besteht ein zentraler Hohlraum (siehe auch Figuren 4 und 5), der Raum bietet für ein Umlenkgetriebe.

In beispielhaften Ausführungsformen des Verfahrens in welchen die rotierende Scheibe 1 bis zu ihrem Mittelpunkt 3 in die proximal zugängliche Fläche 7 des Keramikimplantates oder in die Endfläche 8 des keramischen Aufbauelementes vorgetrieben wird entsteht ein Schlitz 15, dessen Längsschnitt parallel zur Vortriebrichtung 4 der rotierenden Scheibe 1 am distalen Ende den Kreisbogen 22 eines Halbkreises 23 aufweist. In Ausführungsformen des Verfahrens, in welchen rotierende Scheibe 1 tiefer als bis zu ihrem Mittelpunkt in die proximal zugängliche Fläche vorgetrieben wird, entsteht ein Längsschnitt, der am distalen Ende den Kreisbogen 22 des Halbkreises 23 aufweist und der lateral durch je eine Tangente an den Halbkreis parallel zur Vortriebsrichtung der Scheibe begrenzt wird.

**Figuren 3 bis 5** zeigen schematische Darstellungen von beispielhaften Ausführrungsformen von Innenstrukturen mit mindestens einem Teilschlitz 45. Die Figuren 3a, 4a, und 5a zeigen jeweils eine Aufsicht auf eine proximal zugängliche Fläche des Implantates 7 und die Figuren 3b, 4b, und 5b zeigen jeweils einen Schnitt durch das Keramikimplantat 5, wobei die Schnitte nur einen proximalen Bereich eines zweiteiligen Keramikimplantates zeigen. Distale Bereiche des Keramikimplantates umfassend beispielsweise ein Gewinde oder Schneidekanten, um das Keramikimplant in den Knochen einzudrehen sind nicht gezeichnet. Auf Grund seiner Herstellung mit der rotierenden Scheibe 1 weist der Teilschlitz 45 die Rundung 18 an einer der Mantelfläche des Implantates oder des Aufbauelementes zugewandten Stirnseite des Schlitzes auf.

Selbstverständlich sind auch Ausführungsformen aufweisend Teilschlitze 45 mit Abschnitten des Kreisbogens 22 auch in Endflächen von keramischen Aufbauelementen herstellbar.

**Fig.3** zeigt eine beispielhafte Ausführungsform einer Innenstruktur mit zwei sich kreuzenden Schlitzen, wodurch vier Teilschlitze 45 gebildet werden. Die Teilschlitze weisen eine Schlitzbreite 13 auf. Die ursprüngliche Schlitzbreite 12 wird geteilt in zwei Teilschlitzlängen 42, welche wegen der Überlappung der Schlitze kürzer ist als die Hälfte der Schlitzbreite 12. Ein Längsschnitt durch zwei Teilschlitze, die aus einem Schlitz entstanden der durch eine Kreuzung mit einem zweiten Schlitz unterbrochenen wurde, parallel zur Vortriebrichtung der rotierenden Scheibe, ist dann kein vollständiges Kreissegment mehr sondern sind zwei Teile 46 eines Kreissegmentes, das durch die Breite 13 des kreuzenden Schlitzes unterbrochen wurde. Beide Teile 46 des Kreissegmentes weisen je einen Abschnitt des Kreisbogens 22 auf. Ein Endpunkt 48 des Abschnittes des Kreisbogens 22 liegt in der proximal zugänglichen Fläche. In ähnlichen Ausführungsformen des keramischen Aufbauelementes 6 mit einem Teilschlitz 45 liegt der Endpunkt 48 des Abschnittes des Kreisbogens 22 analog in der Endfläche 8 des Aufbauelementes 6.

**Fig.4** zeigt eine beispielhafte Ausführungsform einer Innenstruktur mit einem Hohlraum 47 und zwei Teilschlitzen 45. Eine solche Innenstruktur ist herstellbar in einer proximal zugänglichen Fläche 7 eines Keramikimplantates oder selbstverständlich auch in einer Endfläche 8 eines Aufbauelementes 6, welche nicht geschlossen ist sondern von einen Hohlraum, insbesondere von einen zentralen Hohlraum 47 des Implantates oder Aufbauelementes durchbrochen wird. In manchen nicht dargestellten Ausführungsformen öffnet sich der Hohlraum nicht nur in die proximal zugängliche Fläche sondern auch in eine Mantelfläche des Keramikimplantates.

In der dargestellten Ausführungsform in Figur 4 sind zwei Teilschlitze 45 gezeigt, welche beispielsweise in einem Schleifschritt mit einer Scheibe 1 hergestellt wurden, wobei die Scheibe 1 in die durch einen Hohlraum 47 unterbrochene proximal zugängliche Fläche 7 vorgetrieben wurde. Der Scheibendurchmesser 9 ist mindestens um die Teilschlitzlänge 42 grösser als der Durchmesser 41 des Hohlraums 47. So entstehen von Anfang an zwei Teilschlitze 45, welche je einen Abschnitt des Kreisbogens 22 aufweisen. Durch weitere Schleifschritte mit der Scheibe 1 sind weitere Paare von Teilschlitzen 45 herstellbar. Selbstverständlich könnte auch zuerst ein Schlitz oder mehrere Schlitze mit einer Schleifscheibe 1 hergestellt werden und danach ein Hohlraum 47, welcher die Schlitze in jeweils 2 Paare von Teilschlitzen aufteilt.

Ein Längsschnitt durch diese zwei Teilschlitze 45 parallel zur Vortriebrichtung der rotierenden Scheibe, ist kein vollständiges Kreissegment sondern es sind zwei Teile 46 eines Kreissegmentes, das durch den Durchmesser 41 des Hohlraumes 47 unterbrochen wurde. Beide Teile 46 des Kreissegmentes weisen je einen Abschnitt des Kreisbogens 22 auf. Ein Endpunkt 48 des Abschnittes des Kreisbogens 22 liegt in der proximal zugänglichen Fläche 7 während der andere Endpunkt 49 des Kreisbogens im Innern des Keramikimplantates 5 oder in analogen Ausführungsformen des keramischen Aufbauelementes 6 liegt, insbesondere auf einer Innenwand eines Hohlraums 47 des Keramikimplantats oder eines Hohlraums 50 des keramischen Aufbauelementes 6.

**Fig.5** zeigt eine beispielhafte Ausführungsform einer Innenstruktur mit einem Hohlraum 47 und einem Teilschlitz 45. Um Ausführungsformen des Keramikimplantates 5 oder des keramischen Aufbauelementes 6 mit einer Innenstruktur herzustellen, welche nur einen Teilschlitz 45 oder einer ungerade Anzahl von Teilschlitzen 45 aufweist, wird die Länge 42 des Teilschlitzes 45 so gewählt, dass sie kleiner ist als die Hälfte des Durchmessers 41 des Hohlraums 47, also insbesondere so dass die Schleifscheibe 1 in die proximal zugängliche Fläche 7 des Implantates 5 oder in die Endfläche 8 des Aufbauelementes 6 vorgetrieben werden, dass sie die Umrandung des Holraumes an der Fläche 7 oder 8 nur an einer Stelle berührt und nur an einer Stelle in die Fläche 7 oder 8 vorgetrieben wird. Auf diese Weise wird in einem Schleifschritt nur ein Teilschlitz 45 hergestellt, wobei ein Längsschnitt durch diesen Teilschlitz 45 parallel zur Vortriebrichtung der rotierenden Scheibe 1, kein vollständiges Kreissegment darstellt sondern nur einen Teil 46 eines Kreissegmentes, das an den Hohlraumes 47 angrenzt. Der Teil 46 des Kreissegmentes weist einen Abschnitt des Kreisbogens 22 auf. Ein Endpunkt 48 des Abschnittes des Kreisbogens 22 liegt in der Fläche 7 oder 8 während der andere Endpunkt 49 des Kreisbogens im Innern des Keramikimplantates oder des keramischen Aufbauelementes liegt, insbesondere auf einer Innenwand eines Hohlraums 47 des Keramikimplantats oder keramischen Aufbauelementes.

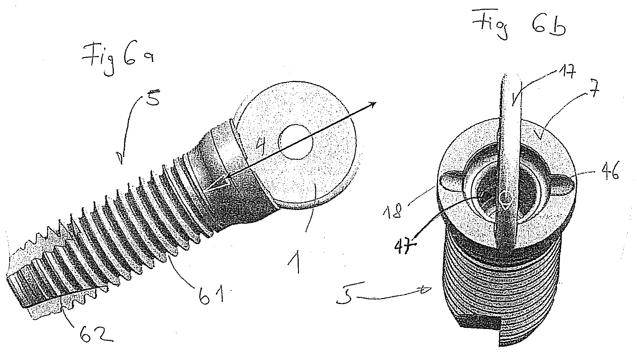

**Fig. 6a und 6b** sind 3D Darstellungen zu einer Ausführungsform des Herstellungsverfahrens einer Innenstruktur in der proximal zugänglichen Endfläche 7 eines beispielhaften zweiteiligen Keramikimplantates 5, welche einen Hohlraum 47 umrandet. Durch ein erstes Vortreiben der rotierenden Scheibe 1 in einer Vortriebrichtung 4 senkrecht zu ihrer Rotationsachse entstehen zwei Teilschlitze 45. Die gleich dimensionierte Schreibe 1 wird ein zweites Mal in die proximal zugängliche Fläche, vorgetrieben, wobei die Scheibe zwischen dem ersten und zweiten Schritt um 90° gedreht wird. So können beispielsweise wie dargestellt zwei Paare von Teilschlitzen 45, welche senkrecht zueinander angeordnet sind, hergestellt werden. Selbstverständlich können durch ein ähnliches Verfahren mit weiteren Schleifschritten weitere Innenstrukturen mit einer geraden Anzahl von Teilschlitzen hergestellt werden, beispielsweise mit 4 Schleifschritten eine Innenstruktur mit 8 Teilschlitzen 45 usw. Die Stirnfläche 17 der Schleifscheibe 1 formt die Rundung 18 die Rundung 18 der der Mantelfläche zugewandten Stirnseite der Teilschlitze 45.

Es ist ein grosser Vorteil der Erfindung, dass derartige Innenstrukturen mit einer Schleifscheibe, insbesondere Formschleifscheibe in sehr kurzer Zeit herstellbar sind. Die Bearbeitungszeit beispielsweise für die Herstellung einer Innenstruktur als Eindrehgeometrie, Verdrehsicherung und/oder Positionierstruktur mit einem Schlitz bzw. zwei Teilschlitzen ist typischerweise weniger als drei Minuten, insbesondere weniger als eine Minute. Innenstrukturen wie die in der Figur 6 dargestellte Innenstruktur mit zwei Schlitzen bzw. vier Teilschlitzen sind beispielsweise in einer bis drei Minuten herstellbar.

Die Innenstruktur des in Figur 6a und 6b beispielhafte dargestellten Keramikimplantates eines zwei oder mehrteiligen Implantatsystems dient als Eindrehgeometrie in Wirkverbindung mit einem Eindrehwerkzeug. Das beispielhafte Keramikimplantat 5 weist ein Gewinde 61 und Schneidekanten 62 auf. In manchen Ausführungsformen dient die Innenstruktur auch als Positionierstruktur in Wirkverbindung mit einem Aufbauelement.

Das in Figur 6a und 6b beispielhafte dargestellte Keramikimplantat weist im proximalen Bereich die Innenstruktur mit den vier Teilschlitzen 45 auf und einen Hohlraum 47 mit einer Innenwand, welche ringförmige Vertiefungen aufweist. Solche ringförmige Vertiefungen sind vorteilhaft für geklebte zweiteilige Implantate, da das Klebmittel in diesen Vertiefungen Platz findet.

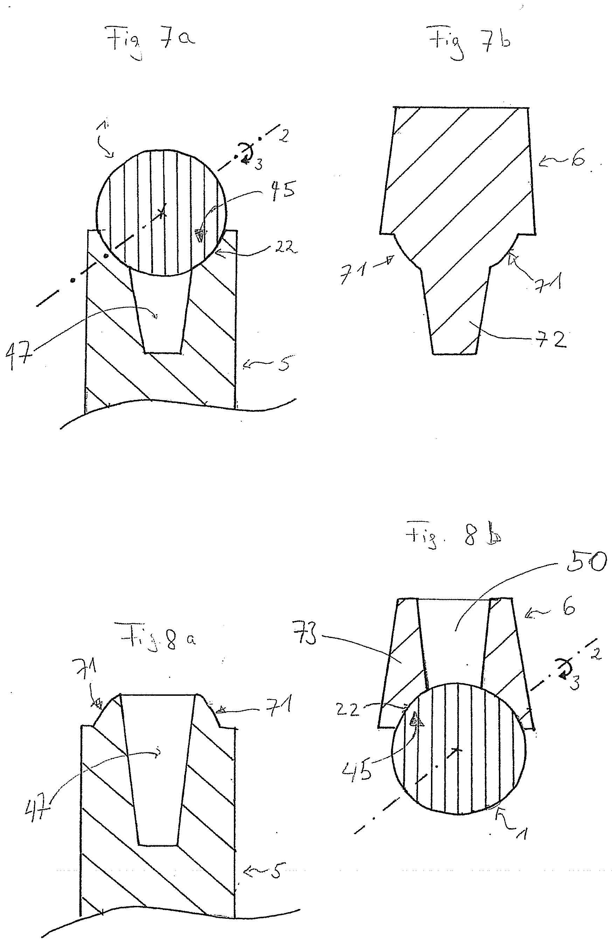

**Fig.7** und **Fig.8** sind Schnittzeichnungen von beispielhaften Ausführungsformen eines Implantatsystems. Fig.7 a zeigt eines beispielhaftes Keramikimplantat mit einer Innenstruktur und in Fig.7b eines beispielhaftes Aufbauelement mit einer Aussenstruktur, wobei das Aufbauelement mit der Aussenstruktur keramisch sein kann aber nicht sein muss. Fig.8 a zeigt ein Implantat mit einer beispielhaften Aussenstruktur, wobei das Implantat keramisch sein kann aber nicht sein muss. Fig. 8b zeigt ein beispielhaftes keramisches Aufbauelement mit einer Innenstruktur.

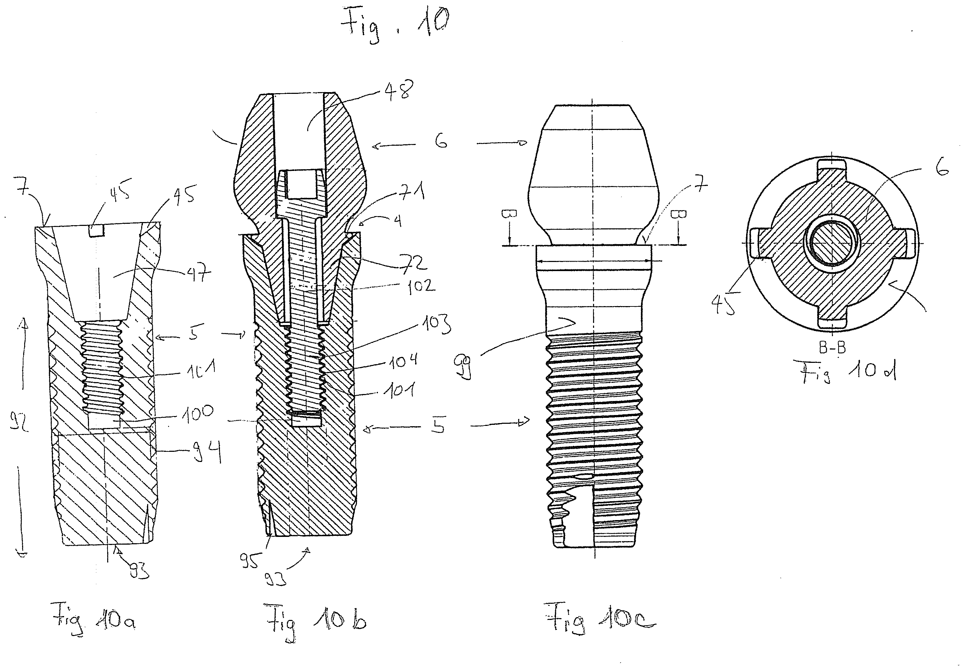

Das in Figur 7 dargestellte Aufbauelement 6 enthält einen Innenkonus 72, der in das Implantat 7 eingefügt wird. Das in Figur 8 dargestellte Aufbauelement 6 enthält einen Aussenkonus 73, der auf das Implantat gesetzt wird. In den dargestellten Ausführungsformen ist die Verbindung zwischen Implantat 5 und Aufbauelement 6 eine geklebte Verbindung, es ist also ein mindestens zweiteiliges geklebtes Implantatsystem. Selbstverständlich sind auch Aufbauelemente 6 als Innen- und Aussenkonus 73 für Implantate 5 mit einer Schraubverbindung Gegenstand dieser Erfindung und müssen die Hohlräume 47 und 50 nicht ein Innenkonus 72 sein sondern können auch ein Innenzylinder sein oder ein anders geformter innerer Hohlraum sein. Im Falle einer geschraubten Verbindung zwischen dem Aufbauelement und dem Implantat sind im Stand der Technik übliche Gewindebohrungen und Schrauben verwendbar (siehe auch Figur10).

Die in Fig. 7 und 8 dargestellten Innenstrukturen sind in einem Schleifschritt mit der dargestellten Schleifscheibe 1 herstellbar und weisen nach dem Entfernen der Scheibe zwei Teilschlitzen 45 auf, mit einem Kreisbogenabschnitt 22 auf, sind. Die Teilschlitze 45 münden in einen konischen Hohlraum 47 des Keramikimplantates 5 oder in einen inneren Hohlraum 50 des keramischen Aufbauelementes 6, der wie in der dargestellten Ausführungsform in Fig.8b beispielsweise zweiseitig offen ist. Entsprechend den Innenstrukturen weisen die dargestellten Aussenstrukturen zwei Flügel 71 auf die mit den Teilschlitzen 45 wirkverbunden werden können. Die Flügel 71 des dargestellten Aufbauelementes eines geklebten Implantatsystems dienen als Positionierstruktur für die Verbindung des Aufbauelementes 6 mit dem Implantat 5. Selbstverständlich sind auch Innenstrukturen mit anderen Radien der Schleifscheibe, oder unterschiedlicher Vortriebtiefe der Scheibe mit diesem Verfahren herstellbar. Ebenso selbstverständlich sind Innenstrukturen wie in obigen Figuren beschrieben ohne Hohlraum 47, mit einem Schlitz 15 mit einem Teilschlitz oder mit mehr als zwei Teilschlitzen herstellbar

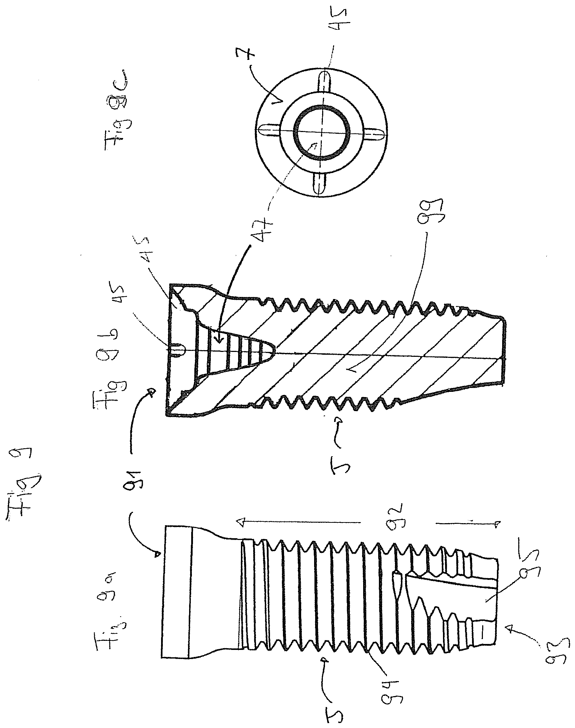

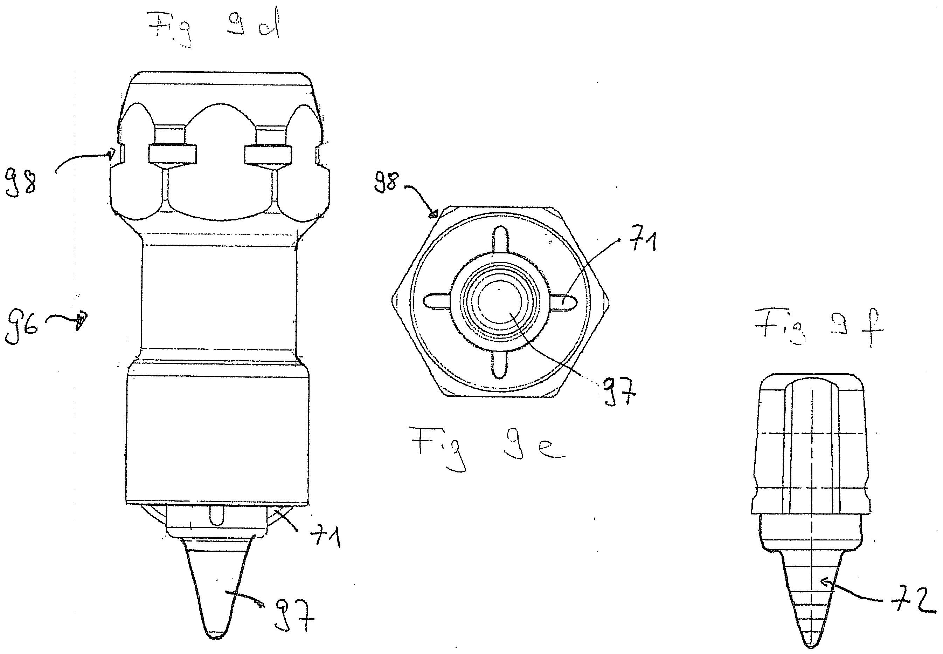

**Fig. 9** **und** **Fig. 10** zeigen je eine beispielhafte Ausführungsform für eine geklebte und eine geschraubte Verbindung zwischen einem Implantat und einem Aufbauelement das einen Innenkonus 72 aufweist, welcher in das Implantat eingefügt wird.

**Fig. 9****:** Ausführungsbeispiel eines geklebten mindestens zweiteiligen Implantatsystem:
**Fig. 9** **a** zeigt eine Aufsicht auf ein beispielhaftes stiftförmiges Keramikimplantat 5, **Fig. 9b** einen Schnitt durch das Implantat 5 und **Fig. 9c** zeigt eine Aufsicht auf die Stirnseite am proximalen Ende 91 des Keramikimplantates 5. Die Stirnseite 91 weist die proximal zugängliche Fläche 7 auf, welche einen zentralen Hohlraum 47 ringförmig umrandet. Die Innenstruktur enthält vier Teilschlitze 45. Diese Innenstruktur ist die Eindrehgeometrie, um das Keramikimplantat in ein Knochengewebe einzudrehen. Das beispielhafte Keramikimplantat 5 weist in einem distalen Bereich 92 mit einem Gewinde 94 und zum distalen Ende 93 hinführend Schneidekanten 95 auf. Die Mantelfläche 99 dieser Ausführungsform des Keramikimplantates 5 eines mindestens zweiteiligen Implantatsystems ist ausser der proximal zugänglichen Fläche 7 nach der Implantation im Wesentlichen von Knochengewebe umgeben.

**Fig. 9d** zeigt ein beispielhaftes Eindrehwerkzeug 96 mit einem Innenkonus 97 und einer Aussenstruktur mit vier Flügeln 71, welche in das Implantat eingreifen. Der Innenkonus ist in den Hohlraum 47 des Keramikimplantates 5 einführbar. Dabei greifen die vier Flügel 71 der Aussenstruktur des Eindrehwerkzeuges 96 in die vier Teilschlitze 45 des Keramikimplantates und eine auf das Werkzeug 96 ausgeübte Rotationskraft wird auf das Keramikimplantat 5 übertragen. Die Rotationskraft wird beispielsweise mittels einer elektrischen oder mechanischen Zahnratsche auf das Werkzeug ausgeübt, wobei die Zahnratsche eine Innenstruktur aufweist, die an der Aussenstruktur 98 im proximalen Bereich des Werkzeuges 96 angreift. **Fig. 9e** zeigt eine Aufsicht auf das Werkzeug von der distalen Seite her gesehen. **Fig. 9f** zeigt eine Aufsicht auf ein beispielhaftes keramisches Aufbauelement 6 für das Keramikimplantat 5, mit einem Innenkonus, der in den Hohlraum 47 des Keramikimplantates eingreift und mit einer Klebverbindung am Implantat befestigt wird.

**Fig. 10****:** Ausführungsbeispiel für ein geschraubtes mindestens zweiteiliges Implantatsystem.
**Fig. 10** **a** zeigt einen Schnitt auf ein beispielhaftes stiftförmiges Keramikimplantat 5, **Fig. 10b** zeigt einen Schnitt durch ein beispielhaftes geschraubtes mindestens zweiteiliges Implantatsystem mit dem Implantat 5 und dem Aufbauelement 6 und **Fig. 10c** zeigt eine Aufsicht auf das beispielhafte Keramikimplantatsystem und **Fig. 10d** zeigt eine Aufsicht auf die Schnittebene B-B, das heisst auf die proximale Endfläche 7 des Keramikimplantates und auf eine Schnittebene durch das eingeschraubte Aufbauelement 6.

Die proximal zugängliche Fläche 7 des stiftförmigen Keramikimplantates umrandet einen zentralen konischen Hohlraum 47, welcher an seinem distalen Ende in einen weiteren zentralen Hohlraum der zylindrisch ist. Das Keramikimplantat weist eine Innenstruktur mit vier Teilschlitzen 45 auf, welche als Eindrehgeometrie dienen um das Keramikimplantat 5 in ein Knochengewebe einzudrehen. Das beispielhafte Keramikimplantat 5 weist in einem distalen Bereich 92 ein Aussengewinde 94 und zum distalen Ende 93 hinführend Schneidekanten 95 auf.

Fig. 10b zeigt beispielhaft wie eine Schraube 103 zur Verbindung des Aufbauelementes 6 mit dem Implantat 5 durch dessen konischen Hohlraum 47 für den Innenkonus 72 des Aufbauelementes 6 in den zylindrischen Hohlraum 100 führbar ist. Der zylindrische Hohlraum 100 weist ein Innengewinde 101 auf und die Schraube 103 weist ein Aussengewinde 104 auf. Fig. 10c zeigt eine Aufsicht auf das beispielhafte zweiteilige Implantatsystem der Mantelfläche 99 und der proximal zugänglichen Fläche 7 des Keramikimplantates 5. Die Mantelfläche 99 dieser Ausführungsform des Keramikimplantates 5 ist ausser der proximal zugänglichen Fläche 7 nach der Implantation im Wesentlichen von Knochengewebe umgeben. Fig. 10d zeigt eine Aufsicht auf die Schnittebene B-B, das heisst auf die proximale Endfläche 7 des Keramikimplantates und auf eine Schnittebene durch das eingeschraubte Aufbauelement 6 und mit den Teilschlitzen 45 der Innenstruktur, welche als Eindrehgeometrie und als Verdrehsicherung dient.

## Patentansprüche

1. Verfahren zur Herstellung einer Innenstruktur mit einer schlitzartigen Öffnung als Eindrehgeometrie und/oder als Verdrehsicherung oder als Positionierstruktur eines Keramikimplantates (5) oder eines keramischen Aufbauelementes (6), wobei eine rotierende Scheibe (1) zur Abtragung von Keramikmaterial in einer Vortriebrichtung (4) der rotierenden Scheibe senkrecht zur Rotationsachse der Scheibe (1) in eine proximal zugängliche Stirnfläche (7) des Keramikimplantates (5) oder in eine Endfläche (8) eines keramischen Aufbauelementes (6) vorgetrieben wird.

2. Verfahren nach Anspruch 1, wobei die rotierende Scheibe (1) weniger tief als bis zu ihrem Mittelpunkt (14) in die proximal zugängliche Stirnfläche (7) des Keramikimplantates (5) oder in die Endfläche (8) des keramischen Aufbauelementes (6) vorgetrieben wird.

3. Verfahren nach Anspruch 1 oder 2, wobei das Keramikimplantat (5) oder das keramische Aufbauelement (6) vor der Herstellung der mindestens einen Innenstruktur gesintert wird.

4. Verfahren nach einem der Ansprüche 1 oder 2, wobei das Keramikimplantat (5) oder das keramische Aufbauelement (6) nach der Herstellung der mindestens einen Innenstruktur gesintert wird.

5. Verfahren nach einem der Ansprüche 1 bis 4 , wobei das Keramikimplantat (5) einen Hohlraum (47) aufweist, der sich in der proximal zugänglichen Stirnfläche (7) des Keramikimplantates (5) öffnet oder wobei das keramische Aufbauelement (6) einen Hohlraum (50) aufweist, der sich in der Endfläche (8) des keramischen Aufbauelementes (6) öffnet und wobei die proximal zugängliche Stirnfläche (7) die Öffnung des Hohlraums (47) oder wobei die Endfläche (8) die Öffnung des Hohlraums (50) umrandet.

6. Verfahren nach einem der Ansprüche 1 bis 5, wobei die Innenstruktur mehrere Schlitze (15) oder Teilschlitze (45), insbesondere eine gerade Zahl von Schlitzen (15) oder Teilschlitzen (45) aufweist oder insbesondere wobei die Innenstruktur einen Teilschlitz (45) aufweist.

7. Verfahren einem der Ansprüche 1 bis 6, wobei das Keramikimplantat (5) ein stiftförmiges Keramikimplantat ist.

8. Keramikimplantat (5) aufweisend mindestens eine Innenstruktur mit einer schlitzartigen Öffnung in einer proximal zugänglichen Stirnfläche (7) des Keramikimplantates (6), wobei ein Längsschnitt durch die Innenstruktur einen Kreisbogen (22) eines Kreissegmentes (20) oder einen Abschnitt eines Kreisbogens (22) eines Teils (46) des Kreissegmentes (20) enthält,
**dadurch gekennzeichnet, dass** das Keramikimplantat (5) einen Hohlraum (47) mit einer Innenstruktur aufweist, in deren Längsschnitt ein Endpunkt (48) eines Abschnittes des Kreisbogens (22) in der proximal zugänglichen Stirnfläche (7) liegt und wobei ein anderer Endpunkt (49) des Abschnittes des Kreisbogens (22) im Innern des Keramikimplantates, insbesondere auf einer Innenwand des Hohlraums (47) des Keramikimplantats, angeordnet ist.

9. Aufbauelement (6) aufweisend mindestens eine Innenstruktur, wobei das Aufbauelement ein keramisches Aufbauelement ist und die Innenstruktur eine schlitzartige Öffnung in einer Endfläche (8) aufweist, wobei ein Längsschnitt durch die Innenstruktur einen Kreisbogen (22) eines Kreissegmentes (20) oder einen Abschnitt eines Kreisbogens (22) eines Teils (46) des Kreissegmentes (20) enthält,
**dadurch gekennzeichnet, dass** das keramisches Aufbauelement (6) einen Hohlraum (50) mit einer Innenstruktur aufweist, in deren Längsschnitt ein Endpunkt (48) eines Abschnittes des Kreisbogens (22), in der Endfläche (8) liegt und wobei ein anderer Endpunkt (49) des Abschnittes des Kreisbogens (22) im Innern des keramischen Aufbauelementes, insbesondere auf einer Innenwand des Hohlraums (50) des Aufbauelementes, angeordnet ist.

10. Keramikimplantat (5) nach Anspruch 8 oder keramisches Aufbauelement (6) nach Anspruch 9, wobei das Segment (20) kleiner als ein Halbkreis ist und/oder wobei mindestens ein Endpunkt (48) des Kreisbogens (22) in der proximal zugänglichen Stirnfläche (7) des Keramikimplantates (5) liegt und/oder wobei mindestens ein Endpunkt (48) des Kreisbogens (22) in der Endfläche (8) des keramischen Aufbauelementes (6) liegt.

11. Keramikimplantat (5) nach einem der Ansprüche 8oder 10 oder keramisches Aufbauelement (6) nach einem der Ansprüche 9, 10 oder 11, wobei die Innenstruktur mehrere Schlitze (15) oder Teilschlitze (45), insbesondere eine gerade Zahl von Schlitzen (15) oder Teilschlitzen (45) aufweist oder insbesondere wobei die Innenstruktur einen Teilschlitz (45) oder eine ungerade Zahl von Teilschlitzen (45) aufweist.

12. Keramikimplantat (5) nach einem der Ansprüche 8, 10 oder 11, wobei es ein stiftförmiges Keramikimplantat ist.

13. Keramikimplantat (5) nach einem der Ansprüche 8 oder 10 bis 12 oder keramisches Aufbauelement (6) nach einem der Ansprüche 9 bis 11, wobei die Innenstruktur eine Eindrehgeometrie, eine Verdrehsicherung oder eine Positionierstruktur oder einen Teil einer Eindrehgeometrie, einer Verdrehsicherung oder einer Positionierstruktur ist.

14. Implantatsystem enthaltend ein Keramikimplantat (5) nach einem der Ansprüche 8 oder 10 bis 13 und/oder enthaltend mindestens ein keramisches Aufbauelement (6) nach einem der Ansprüche 9 bis 13.

15. Set enthaltend ein Keramikimplantat (5) nach einem der Ansprüche 8 oder 10 bis 13 und/oder enthaltend mindestens ein keramisches Aufbauelement (6) nach einem der Ansprüche 9 bis 13 oder ein Implantatsystem nach Anspruch 14, wobei das Keramikimplantat (5) und/oder das keramisches Aufbauelement (6) eine Eindrehgeometrie aufweist und das Set ein in die Eindrehgeometrie eingreifendes Eindrehwerkzeug (96) aufweist.

## Claims

1. A method for manufacturing an inner structure with a slot-like opening as an insertion geometry and/or as a rotation lock or as a positioning structure of a ceramic implant (5) or of a ceramic attachment element (6), wherein a rotating disc (1) for removing ceramic material is advanced in an advance direction (4) of the rotating disc perpendicularly to the rotation axis of the disc (1), into a proximally accessible face surface (7) of the ceramic implant (5) or into an end surface (8) of a ceramic attachment element (6).

2. A method according to claim 1, wherein the rotating disc (1) is advanced less deeply than up to its middle point (14), into the proximally accessible face surface (7) of the ceramic implant (5) or into the end surface (8) of the ceramic attachment element (6).

3. A method according to claim 1 or 2, wherein the ceramic implant (5) or the ceramic attachment element (6) is sintered before the manufacture of the at least one inner structure.

4. A method according to one of the claims 1 or 2, wherein the ceramic implant (5) or the ceramic attachment element (6) is sintered after the manufacture of the at least one inner structure.

5. A method according to one of the claims 1 to 4, wherein the ceramic implant (5) comprises a cavity (47) which opens in the proximally accessible face surface (7) of the ceramic implant (5) or wherein the ceramic attachment element (6) comprises a cavity (50) which opens in the end surface (8) of the ceramic attachment element (6) and wherein the proximally accessible face surface (7) borders around the opening of the cavity (47) or wherein the end surface (8) borders around the opening of the cavity (50).

6. A method according to one of the claims 1 to 5, wherein the inner structure comprises several slots (15) or part-slots (45), in particular an even number of slots (15) or part-slots (45) or in particular wherein the inner structure comprises one part-slot (45).

7. A method according to one of the claims 1 to 6, wherein the ceramic implant (5) is a pin-like ceramic implant.

8. A ceramic implant (5) comprising at least one inner structure with a slot-like opening in a proximally accessible face surface (7) of the ceramic implant (6), wherein a longitudinal section through the inner structure comprises a circular arc (22) of a circle segment (20), or a section of a circular arc (22) of a part (46) of the circle segment (20),
**characterised in that** the ceramic implant (5) comprises a cavity (47) with an inner structure, in whose longitudinal section an end point (48) of a section of the circular arc (22) lies in the proximally accessible face surface (7) and wherein another end point (49) of the section of the circular arc (22) is arranged in the inside of the ceramic implant, in particular on an inner wall of the cavity (47) of the ceramic implant.

9. An attachment element (6) comprising at least one inner structure, wherein the attachment element is a ceramic attachment element and the inner structure comprises a slot-like opening in an end surface (8), wherein a longitudinal section through the inner structure comprises a circular arc (22) of a circle segment (20), or a section of a circular arc (22) of a part (46) of the circle segment (20),
**characterised in that** the ceramic attachment element (6) comprises a cavity (50) with an inner structure, in whose longitudinal section an end point (48) of a section of the circular arc (22) lies in end surface (8) and wherein another end point (49) of the section of the circular arc (22) is arranged in the inside of the ceramic attachment element, in particular on an inner wall of the cavity (50) of the attachment element.

10. A ceramic implant (5) according to claim 8 or a ceramic attachment element (6) according to claim 9, wherein the segment (20) is smaller than a semicircle and/or wherein at least one end point (48) of the circular arc (22) lies in the proximally accessible face surface (7) of the ceramic implant and/or wherein at least one end point (48) of the circular arc (22) lies in the end surface (8) of the ceramic attachment element (6).

11. A ceramic implant (5) according to one of the claims 8 or 10 or ceramic attachment element (6) according to one of the claims 9, 10, or 11, wherein the inner structure comprises several slots (15) or part-slots (45), in particular an even number of slots (15) or part-slots (45) or in particular wherein the inner structure comprise one part-slot (45) or an odd number of part-slots (45).

12. A ceramic implant (5) according to one of the claims 8, 10 or 11, wherein it is a pin-like ceramic implant.

13. A ceramic implant (5) according to one of the claims 8 or 10 to 12 or ceramic attachment element (6) according to one of the claims 9 to 11, wherein the inner structure is an insertion geometry, a rotation lock or a positioning structure or a part of an insertion geometry, of a rotation lock or of a positioning structure.

14. An implant system comprising a ceramic implant (5) according to one of the claims 8 or 10 to 13 and/or comprising at least one ceramic attachment element (6) according to one of the claims 9 to 13.

15. A set comprising a ceramic implant (5) according to one of the claims 8 or 10 to 13 and/or comprising at least one ceramic attachment element (6) according to one of the claims 9 to 13 or an implant system according to claim 14, wherein the ceramic implant (5) and/or the ceramic attachment element (6) comprises an insertion geometry, and the set comprises an insertion tool (96) which engages into the insertion geometry.

## Revendications

1. Procédé de fabrication d'une structure intérieure présentant une ouverture en fente servant de géométrie de vissage et/ou de blocage en rotation ou de structure de positionnement d'un implant (5) en céramique ou d'un élément (6) en céramique à monter, dans lequel un disque rotatif (1) est avancé dans une surface frontale proximale accessible (7) de l'implant (5) en céramique ou dans une surface d'extrémité (8) d'un élément (6) en céramique à monter pour enlever du matériau céramique, la direction d'avancement (4) du disque rotatif étant perpendiculaire à l'axe de rotation du disque (1).

2. Procédé selon la revendication 1, dans lequel le disque rotatif (1) est avancé moins profondément que jusqu'en son centre (14) dans la surface frontale proximale accessible (7).

3. Procédé selon les revendications 1 ou 2, dans lequel l'implant (5) en céramique ou l'élément (6) en céramique à monter sont frittés avant la fabrication de la ou des structures intérieures.

4. Procédé selon l'une des revendications 1 ou 2, dans lequel l'implant (5) en céramique ou l'élément (6) en céramique à monter sont frittés après la réalisation de la ou des structures intérieures.

5. Procédé selon l'une des revendications 1 à 4, dans lequel l'implant (5) en céramique présente une cavité (47) qui s'ouvre dans la surface frontale proximale accessible (7) de l'implant (5) en céramique ou dans lequel l'élément (6) en céramique à monter présente une cavité (50) qui s'ouvre dans la surface d'extrémité (8) de l'élément (6) en céramique à monter, la surface frontale proximale accessible (7) entourant l'ouverture de la cavité (47) ou la surface d'extrémité (8) entourant l'ouverture de la cavité (50).

6. Procédé selon l'une des revendications 1 à 5, dans lequel la structure intérieure présente plusieurs fentes (15) ou fentes partielles (45), notamment un nombre pair de fentes (15) ou de fentes partielles (45), ou en particulier dans lequel la structure intérieure présente une fente partielle (45).

7. Procédé selon l'une des revendications 1 à 6, dans lequel l'implant (5) en céramique est un implant en céramique en forme de tige.

8. Implant (5) en céramique présentant au moins une structure intérieure dotée d'une ouverture en fente dans une surface frontale proximale accessible (7) de l'implant (6) en céramique et dans lequel une coupe longitudinale traversant la structure intérieure contient un arc de cercle (22) d'un segment de cercle (20) ou section d'arc de cercle (22) d'une partie (46) du segment de cercle (20),
**caractérisé en ce que**
l'implant (5) en céramique présente une cavité (47) dotée d'une structure intérieure dans la coupe longitudinale de laquelle un point d'extrémité (48) d'une section de l'arc de cercle (22) est situé dans la surface frontale proximale accessible (7) et un autre point (49) de la section de l'arc de cercle (22) est disposé à l'intérieur de l'implant en céramique et en particulier sur une paroi intérieure de la cavité (47) de l'implant en céramique.

9. Elément (6) à monter présentant au moins une structure intérieure, l'élément à monter étant un élément en céramique à monter et la structure intérieure présentant une ouverture en forme de fente dans une surface d'extrémité (8) et dans lequel une coupe longitudinale traversant la structure intérieure contient un arc de cercle (22) d'un segment de cercle (20) ou section d'arc de cercle (22) d'une partie (46) du segment de cercle (20),
**caractérisé en ce que**
l'élément (6) en céramique à monter présente une cavité (50) dotée d'une structure intérieure dans la coupe longitudinale de laquelle un point d'extrémité (48) d'une section de l'arc de cercle (22) est situé dans la surface d'extrémité (8) et un autre point d'extrémité (49) de la section de l'arc de cercle (22) est disposé à l'intérieur de l'élément en céramique à monter et en particulier sur une paroi intérieure de la cavité (50) de l'élément en céramique à monter.

10. Implant (5) en céramique selon la revendication 8 ou élément (6) en céramique à monter selon la revendication 9, dans lesquels le segment (20) est plus petit qu'un demi-cercle, dans lesquels au moins un point d'extrémité (48) de l'arc de cercle (22) est situé dans la surface frontale proximale accessible (7) de l'implant (5) en céramique et/ou dans lesquels au moins un point d'extrémité (48) de l'arc de cercle (22) est situé dans la surface d'extrémité (8) de l'élément (6) en céramique à monter.

11. Implant (5) en céramique selon l'une des revendications 8 ou 10 ou élément (6) en céramique à monter selon l'une des revendications 9, 10 ou 11, dans lesquels la structure intérieure présente plusieurs fentes (15) ou fentes partielles (45), notamment un nombre pair de fentes (15) ou de fentes partielles (45), ou en particulier dans lequel la structure intérieure présente une fente partielle (45) ou un nombre impair de fentes partielles (45).

12. Implant (5) en céramique selon l'une des revendications 8, 10 ou 11, qui est un implant en céramique en forme de tige.

13. Implant (5) en céramique selon l'une des revendications 8 ou 10 à 12 ou élément (6) en céramique à monter selon l'une des revendications 9 à 11, dans lesquels la structure intérieure est une géométrie de vissage, un blocage en rotation ou une structure de positionnement, ou une partie d'une géométrie de vissage, d'un blocage en rotation ou d'une structure de positionnement.

14. Système d'implant contenant un l'implant (5) en céramique selon l'une des revendications 8 ou 10 à 13 et/ou contenant au moins un élément (6) en céramique à monter selon l'une des revendications 9 à 13.

15. Trousse contenant un implant (5) en céramique selon l'une des revendications 8 ou 10 à 13, un élément (6) en céramique à monter selon l'une des revendications 9 à 13 ou un système d'implant selon la revendication 14, dans laquelle l'implant (5) en céramique et/ou l'élément (6) en céramique à monter présente une géométrie de vissage et la trousse présente un outil de vissage (96) qui s'engage dans la géométrie de vissage.
